(19) **Europäisches Patentamt**
**European Patent Office**
**Office européen des brevets**

(11) **EP 2 605 573 A1**

(12) **EUROPEAN PATENT APPLICATION**
published in accordance with Art. 153(4) EPC

(43) Date of publication:
**19.06.2013 Bulletin 2013/25**

(21) Application number: **11816447.4**

(22) Date of filing: **03.08.2011**

(51) Int Cl.:
*H04W 24/04* (2009.01)   *H04L 1/22* (2006.01)
*H04L 27/00* (2006.01)   *H04W 28/18* (2009.01)
*H04W 40/14* (2009.01)

(86) International application number:
**PCT/JP2011/068213**

(87) International publication number:
**WO 2012/020783 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2010 JP 2010181367**

(71) Applicant: **NEC Corporation
Tokyo 108-8001 (JP)**

(72) Inventor: **TANIKAWA, Chikara
Tokyo 108-8001 (JP)**

(74) Representative: **Glawe, Delfs, Moll
Patent- und Rechtsanwälte
Postfach 26 01 62
80058 München (DE)**

(54) **WIRELESS COMMUNICATION NETWORK AND METHOD FOR SELECTING PATH**

(57)    There was an inconvenience that, at the time of path selection of a wireless communication network which is structured using a wireless equipment including an adaptive modulation system, a path setting considering fluctuation of a transmission capacity caused by a state change of a wireless propagation line in each path by a change of such as the weather could not be performed.

Wireless transmission equipment of the present invention includes: a wireless section state monitoring means which monitors a state of a wireless section; an adaptive modulation control means which, corresponding to a change in the state of the wireless section detected by said wireless section state monitoring means, controls a modulation system; and a reliability value calculation means which calculates a reliability value of the wireless section based on information of a communication time in each modulation system outputted from the adaptive Modulation control means.

Fig.13

**Description**

**Technical field**

The present invention relates to a path selection method of a wireless communication networks configured using wireless equipment including an adaptive modulation system.

**Background art**

A communication network using a wireless communication system and, above all, a wireless communication network including a small microwave communication system of Point to Point, are receiving attention as a means to complement an optical communication circuit and a wireless trunk line circuit. For example, it has a wide use such as substitution or backup of a cellular phone network, inter-building communication and an optical communication network.

In these days, demand for a communication network using such a wireless communication system is increasing greatly in a mobile telephone network market which expands rapidly worldwide. This is because such a system has characteristics, as a communication system which ties between base stations, such as cost performance of equipment, easiness of construction, flexibility to a system change and large capacity.

As demands for high-speed/broadband increase for such communication, provision of cheaper and high quality circuit service is asked for.

Also, as recent years' mobile network becoming more complicated, reduction of operator's CAPEX (Capital Expenditure) / OPEX (Operating Expense) is required and economization of communication equipment and efficiency of a network are required. Therefore, technologies which perform efficient path selection and technologies which perform a circuit switching at the time of failure are essential and important.

Among microwave communication systems, there exists one including a function which is an adaptive modulation system. This adaptive modulation system is the function to switch automatically a transmission modulation system, according to the circuit condition of a wireless. This function changes, in case the circuit condition is bad, to a condition which raises reliability using a transmission modulation system of which transmission rate is low but error tolerance is high (system gain is high). Conversely, in case the circuit condition is good, it switches to a condition to secure communication capacity using a transmission modulation system of which error tolerance is low (system gain is low) but transmission rate is high.

The circuit condition of this microwave communication system, generally depends on the weather. However, in the microwave communication system using the adaptive modulation system, even in case microwave attenuation caused by a change in the weather occurs, and the circuit condition deteriorates, the system gain can be kept constant by decreasing transmission capacity.

As one of the communication networks including wireless equipment including this adaptive modulation system, there exists an MPLS (Multi Protocol Label Switching) network. In the MPLS network, when a router transmits a packet received from other routers to a different router, a short fixed length identification mark called "label" is utilized as routing (path selection) information.

In the network including routers corresponding to MPLS (Label Switching Router: LSR), each router holds information to which router to forward in the next according to the destination of a packet, and respective paths are identified by the label. When this MPLS network is configured, and an End to End communication path (LSP: Label Switched Path) is established, criterial parameter to select the path is needed.

As for a decision procedure of this parameter, a technology which, in a path using a wireless communication system, determines the parameter for path selection also considering a change in the wireless transmission capacity by the adaptive modulation system control is disclosed by Japanese Patent Application No. 2010-117095 which the applicant filed previously.

By this technology, switching of circuit used and modification of path used are performed dynamically based on the determined parameter and economic and efficient path selection in the wireless communication network is realized. One which provides a wireless communication network system which can select a transmission path with high transmission efficiency in this way is disclosed.

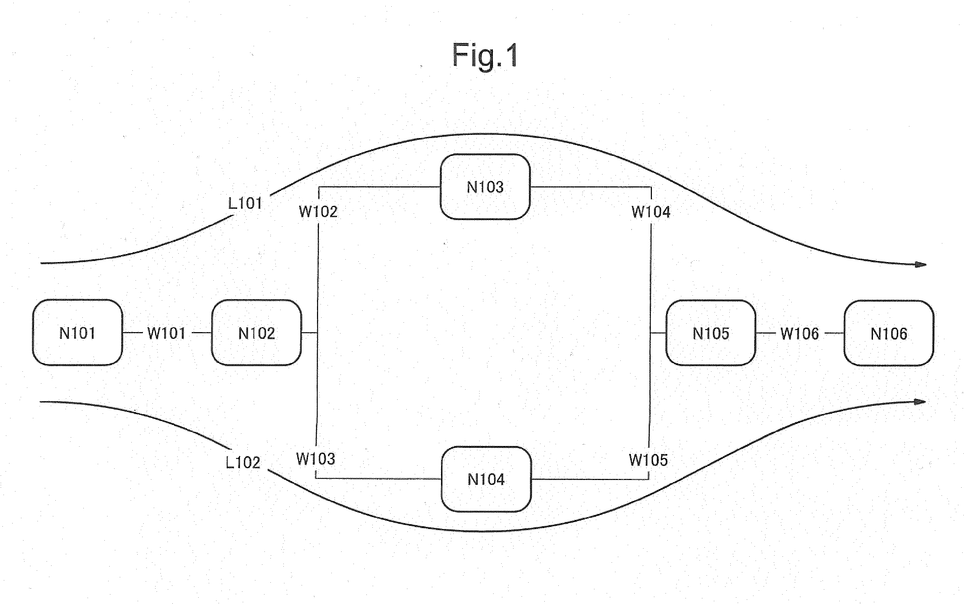

Fig, 1 is a figure for explaining the technology of Japanese Patent Application No. 2010-117095, and a network including adaptive modulation wireless access equipment N101-N106 is indicated. In a path search method shown in Fig. 1, as a path when LSP is set from N101 of Initiator Node to N106 of Terminator Node, whether a path N103 (L101) or a path N104 (L102) is selected is based on an available band (transmission rate) of each path.

Therefore, even if a change in the weather frequently occurs in the path of L101 compared with the path of L102, and a change in the transmission line band frequently occurs by an adaptive modulation function, there is a following problem. That is, in case it is judged that the band of End to End can be secured at the time when LSP is set, there is a possibility that the path is selected as the path to be used actually.

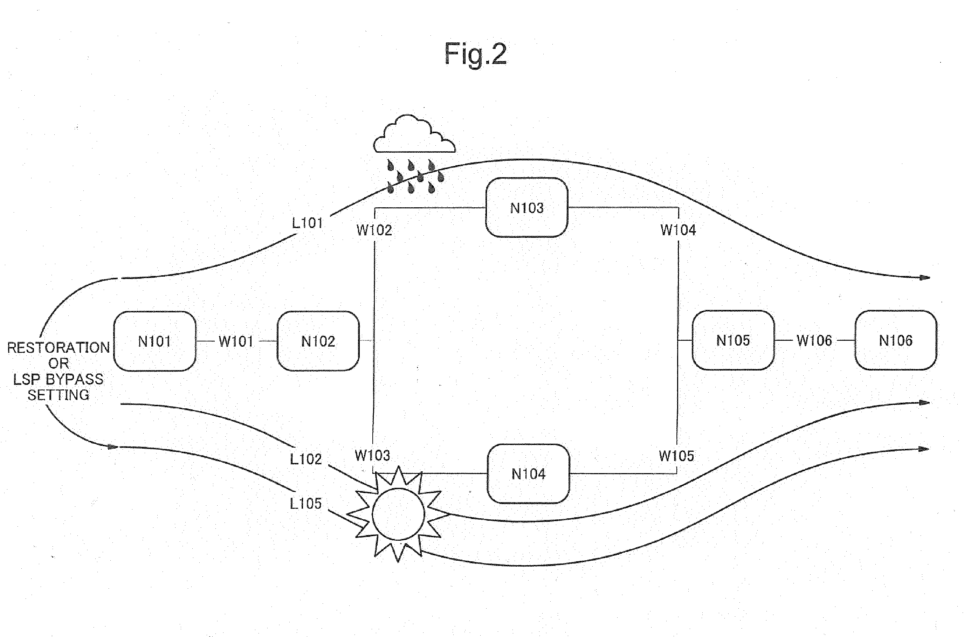

When LSP (L101) via N103 and LSP (L102) via N104 are set for N101-N106, in case attenuation of microwave occurs by a change such as the weather in section N102-N103 (W102), explanation using Fig. 2, becomes as follows. That is, in order to keep the system gain constant, LSP (L101) in the path N103 decreases the transmission capacity of the transmission line.

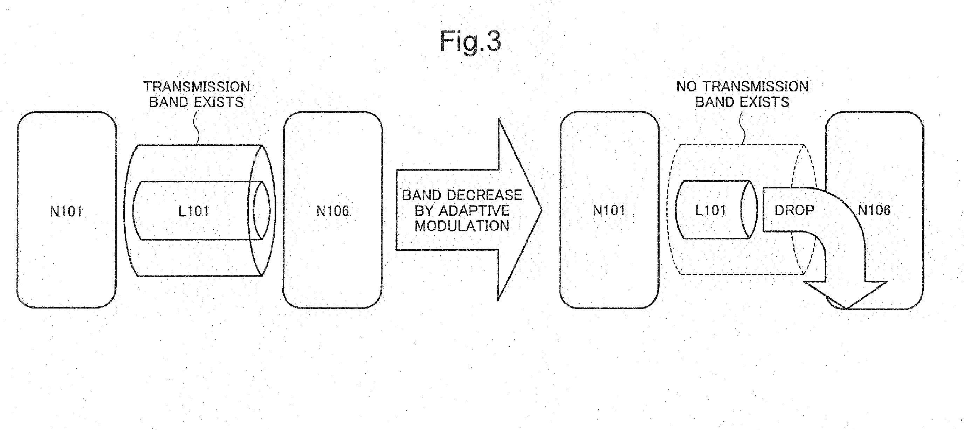

When the capacity of the transmission line declines by adaptive modulation operation, the band to transmit required data cannot be secured and LSP (L101) via N103 cannot be held any more. Therefore, LSP (L101) via N103 lacks wireless transmission line band and discarding of data occurs. Discarding of LSP data by a band change at the time of the adaptive Modulation operation is shown in Fig. 3.

## The preceding technical literature

Patent document

[Patent document 1] Japanese Patent Application No. 2010-117095
[Patent document 2] Japanese Patent Application Laid-Open No. 2006-287549
[Patent document 3] Japanese Patent Publication No. 4432645

## Summary of Invention

### Technical Problem

However, although the technology of the patent document 1 mentioned above was considering fluctuation and so on in the band of the wireless transmission line caused by the adaptive modulation system as a parameter of path search of a network, reliability of the path was not considered. Since there is a case when wireless transmission equipment including adaptive modulation system may make the transmission capacity small instead of holding the system gain in order to cope with a change in wireless propagation path caused by a change such as the weather, fluctuation in the band of the wireless transmission line occurs.

When such fluctuation of the wireless band occurs frequently, there is a possibility that wireless transmission lines established in End to End may frequently be disconnected.

There are some cases that a path should be avoided when the path is less reliability because the path for which good transmission quality is obtained when a wireless propagation environment is good but the wireless propagation environment fluctuates wildly and circuit disconnection occurs frequently.

However, by the related technology mentioned above, path selection considering such reliability could not be performed.

For example, in Fig. 2 which explains the related technology, in case discarding of LSP data by the adaptive modulation operation occurs, possibilities are whether a network administrator sets a new bypass LSP (L105), performs Restoration using a failure recovery function of the MPLS or wait for recovery of the weather.

On the other hand, since there are no changes such as the weather in LSP (L102) of N104 path, and there is no decline of the system gain either, the adaptive modulation function does not operate either. Therefore, although it is a path with no decrease of the wireless band and for which, data transmission with high reliability is possible, the related technology could not perform path setting considering fluctuation of this transmission capacity.

(Object of the Invention)

The object of the present invention is to provide a path selection method of a wireless communication network which enables, at the time of path search, selection of a wireless transmission line considering reliability of the path.

## Solution to Problem

Wireless transmission equipment of the present invention includes a wireless section state monitoring means which monitors a state of a wireless section, an adaptive modulation control means which controls a modulation system in response to a change in the state of the wireless section detected by the wireless section state monitoring means, and a reliability value calculation means which calculates a reliability value of the wireless section based on information of a communication time in each modulation system outputted from the adaptive modulation control means.

A path selection method of the present invention monitors a state of a wireless section, controls a modulation system corresponding to a change in the state of the wireless section, and calculates a reliability value of the wireless section based on information of a communication time in each modulation system.

A program of the present invention makes a computer execute a wireless section state monitoring step which monitors a state of a wireless section, an adaptive modulation control step which controls a modulation system in response to a change in the state of the wireless section detected by the wireless section state monitoring step, a step which calculates a period reliability value from a communication time in each modulation system applied by an adaptive modulation system within a fixed time and a weighting value corresponding to the applied modulation system, a step which calculates a standard reliability value from a frequency of changes occurred in the modulation system by the adaptive modulation within a fixed time, a step which calculates a reliability value from a sum of the period reliability value and the standard reliability value and a step which, based on the reliability value, performs selection from among a plurality of the wireless sections which are provided for possible selection as a path to transmit data.

A wireless communication system of the present invention is a communication system using an adaptive modulation system, in which a modulation system is changed by adaptive modulation, a plurality of wireless sections which are provided for possible selection as a path to transmit data is provided, a reliability value of the plurality of wireless sections is calculated based on information of a communication time in each modulation system applied to the plurality of wireless sections, and a wireless section to transmit data is selected based on the reliability value concerned.

**Advantageous Effects of Invention**

As has been explained above, in the wireless communication network, the wireless transmission equipment and the path selection method of the wireless communication network of the present invention, a path is selected using a reliability value of the path at the time of path search. Therefore, when the path search is performed, the wireless communication network, the wireless transmission equipment and the path selection method of the wireless communication network which can select a path with higher reliability can be provided.

**Brief description of the drawings**

[Fig, 1] A figure of an adaptive modulation wireless access equipment networks
[Fig. 2] A figure of an adaptive modulation wireless access equipment network (at the time of adaptive modulation in operation)
[Fig. 3] A figure of change in a band by adaptive modulation

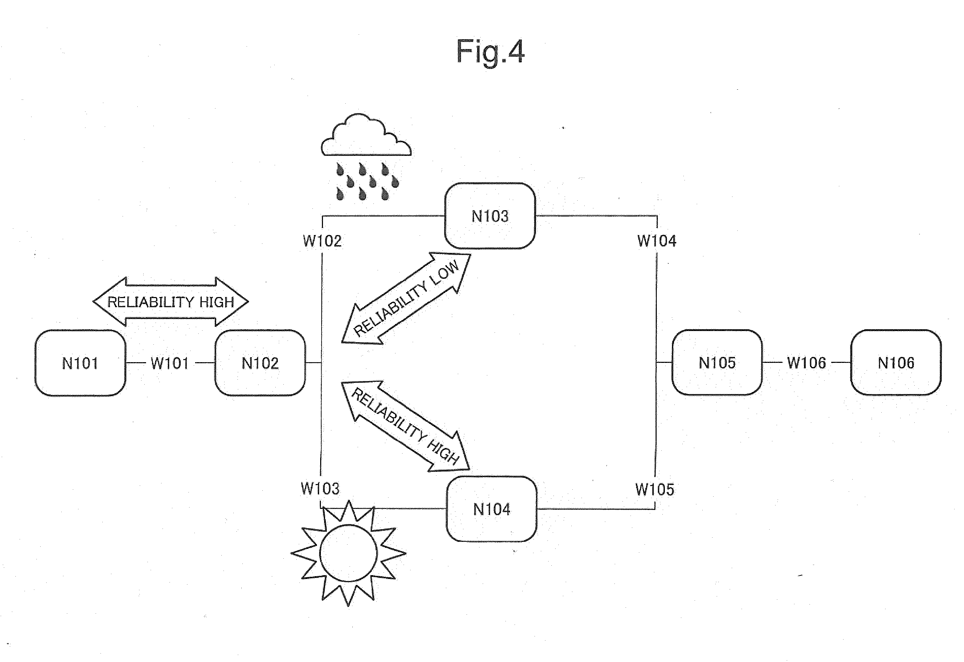

[Fig. 4] A figure of advertisement of a reliability value between wireless transmission equipment,
[Fig. 5] A reliability value calculation flow chart
[Fig. 6] A period reliability value calculation flow chart (part1)
[Fig. 7] A period reliability value calculation flow chart (part2)
[Fig. 8] A period reliability value calculation flow chart (part3)
[Fig. 9] A period (reliability value calculation flow chart (part4)
[Fig. 10] A standard reliability value calculation flow chart
[Fig. 11] A figure showing state transition of a reliability value
[Fig. 12] A figure showing a transition of a reliability value
[Fig. 13] A block diagram of wireless transmission equipment according to the first exemplary embodiment
[Fig. 14] A block diagram of wireless transmission equipment according to the second exemplary embodiment

**Description of Exemplary embodiment**

(The first exemplary embodiment)

The first exemplary embodiment according to the present invention will be described with reference to drawings.

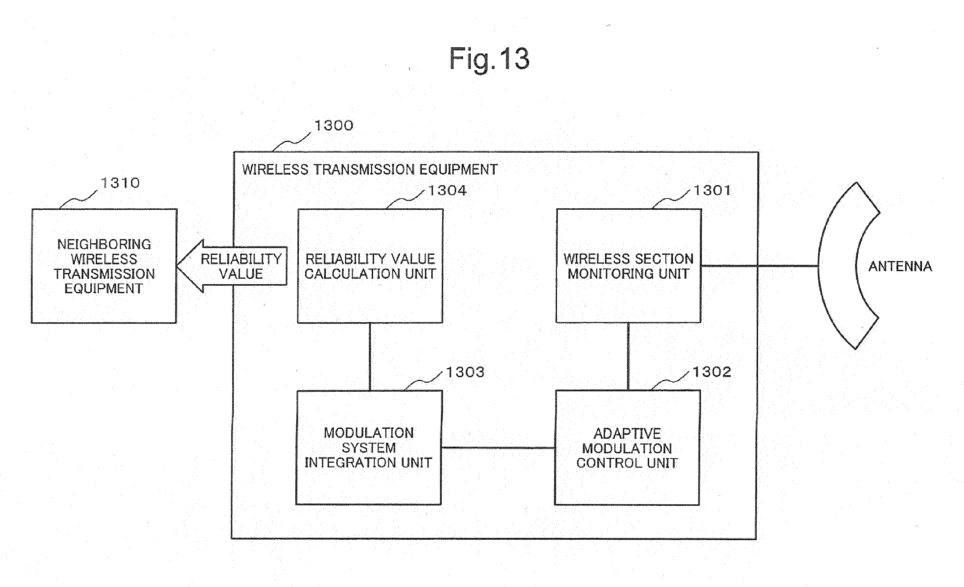

Fig. 13 is a block diagram of wireless transmission equipment using an adaptive modulation system according to the first exemplary embodiment of the present invention.
Wireless transmission equipment 1300 includes a wireless sections monitoring unit 1301 which monitors a state from a wireless section and an adaptive modulation control unit 1302 which controls a modulation system corresponding to a change of the state of the wireless section. Further, this wireless transmission equipment 1300 includes a modulation system integration unit 1303 which integrates a modulation system application time for each modulation system, and a reliability value calculation unit 1304 which calculates a reliability value based on information integrated by the modulation system integration unit.
An index of reliability of a wireless transmission line includes two kinds of reliability values such as a period reliability value and a standard reliability value. The period reliability value is calculated from a communication time in each modulation system applied and a weighting value for the applied modulation system. Also, the standard reliability value is a numerical value considering a frequency of changes occurred in the modulation system by the adaptive modulation. That is, the standard reliability value is a numerical value which guarantees for a fixed period a state in which a modulation system by the adaptive modulation does not occur. The period reliability value shows reliability of sudden and of short-term span mainly, and the standard reliability value shows reliability of average and of long-term span. The reliability value is obtained from a sum of these, that is as follows.

$$\text{Reliability value} = \text{period reliability value} + \text{standard reliability value}$$

In this example, it is supposed that a numerical value of the reliability value of the wireless transmission line takes a numerical value of 32 bits from 1 to $2^{32}$, and the smallest reliability value is 1 and represents the highest reliability. Conversely, $2^{32}$ is the largest reliability value and represents the lowest reliability.

Basic way of consideration of calculating the period reliability value will be described. The period reliability value is obtained by observing the modulation system which changes by the adaptive modulation within a fixed period, and from the communication time and so on in each modulation system. This is because it can be considered that the longer the communication time (staying time) in the modulation system with high modulation level is, the higher the reliability of the transmission line is. A calculation expression Y which becomes a basis of the period reliability value is defined bellow.

$$Y = (A \times t0) + (B \times t1) + (C \times t2) + (D \times t3) + (E \times t4) + (F \times t5)$$

Here,

Y: period reliability value
A: Weighting value of 256QAM
B: Weighting value of 128QAM
C: Weighting value of 64QAM
D: Weighting value of 32QAM
E: Weighting value of 16QAM
F: Weighting value of QPSK
t0: 256QAM staying time (second)
t1: 128QAM staying time (second)
t2: 64QAM staying time (second)
t3: 32QAM staying time (second)
t4: 16QAM staying time (second)
t5: QPSK staying time (second).

An example of weighting of A - F mentioned above is shown in table 1. It is supposed that the adaptive modulation wireless equipment has an ability whose range of modulation system change of the adaptive modulation is from 256QAM to QPSK. As for the weighting of each modulation system defined in table 1, as the modulation level of the modulation system becomes smaller, the wireless transmission capacity also becomes smaller and it is disadvantageous as a path, reliability is considered to be low and a large numerical value is defined as the weighting value. In the example of table 1, if all of the periods are 256QAM, since the weighting value is 0, the period reliability value Y will also be 0, and reliability is evaluated to be highest.

[Table 1]

| Modulation system | Weighting |
| --- | --- |
| 256QAM | 0 |
| 128QAM | 1 |
| 64QAM | 2 |
| 32QAM | 4 |

(continued)

| Modulation system | Weighting |
| --- | --- |
| 16QAM | 8 |
| QPSK | 16 |

Next, basic way of consideration of calculating the standard reliability value will be described. First, 1 is given to the standard reliability value as an initial value. In case the wireless transmission line degrades within 24 hours, as it is considered disadvantageous as a path, the standard reliability value is increased. On the other hand, in case degradation of the wireless transmission line does not occur during 1 week, it is considered that reliability is high as a path, the standard reliability value is decreased By evaluating the wireless transmission line like this, the standard reliability value is determined.

Next, a calculation algorithm of the reliability value (period reliability value + standard reliability value) will be described.

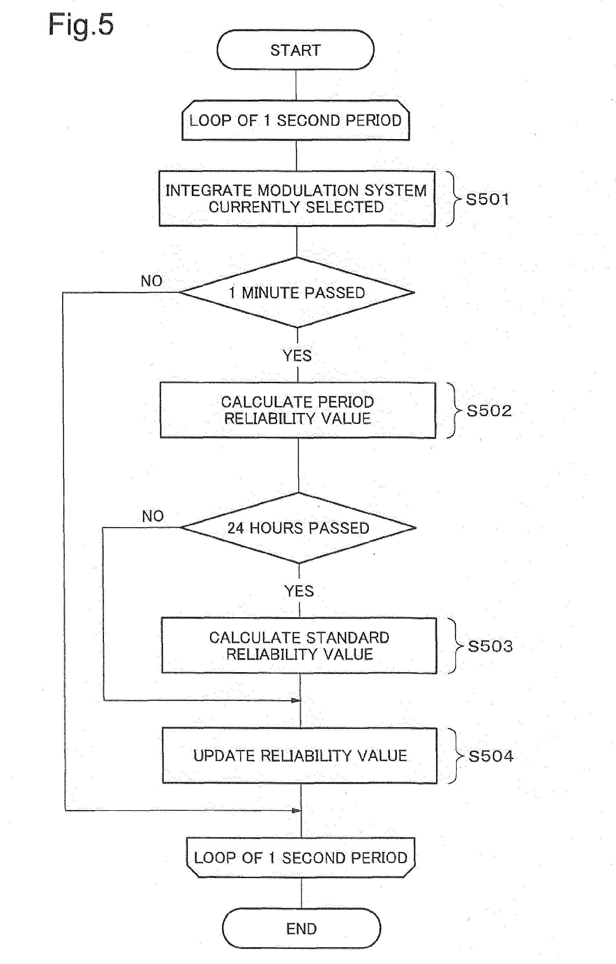

A flow of the reliability value calculation algorithm according to the first exemplary embodiment is shown in Fig. 5.

The reliability value calculation algorithm monitors a change in the modulation system by the adaptive modulation at a 1 second period and integrates the communication time in each modulation system (S501). Starting measurement from an arbitrary time, and each time when 1 minute has passed, the period reliability value using the period calculation expression Y is calculated from the communication time in each modulation system integrated during the past 1 minute (S502), When 24 hours have passed, presence or absence of the transmission line degradation is judged and the standard reliability value is calculated (S503). The reliability value of this time is calculated from the period reliability value, the standard reliability value obtained this time and the reliability value of last time (S504). From Fig. 5, it can be understood that the period reliability value is a numerical value updated every 1 minute, and the standard reliability value is a numerical value updated every 24 hours.

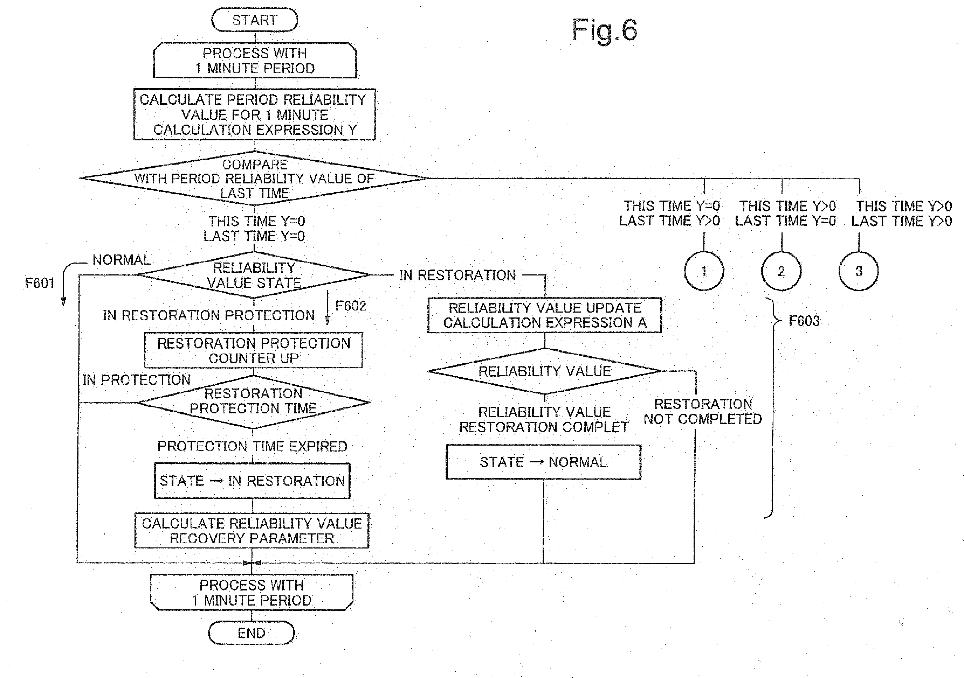

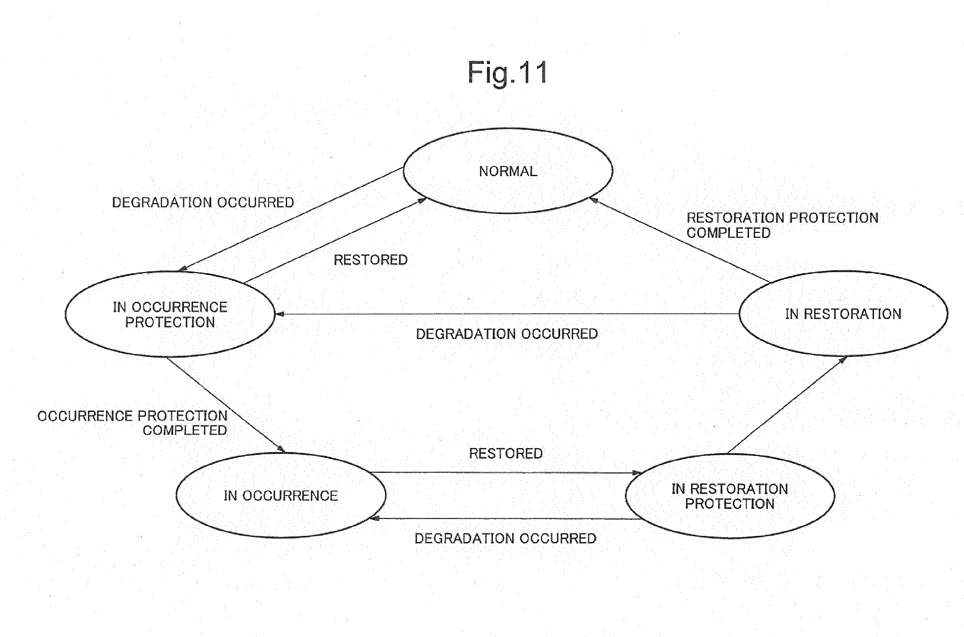

A period reliability value calculation algorithm which corresponds to S502 of Fig. 5 of the reliability value calculation algorithm will be described, The period reliability value calculation algorithm is divided into 4 ways depending on a change of the numerical value of the period reliability value of last time and the numerical value of the period reliability value of this time, and includes four kinds of algorithms. Flow charts of four kinds of algorithms are shown in Figs. 6, 7, 8 and 9. Also, in this period reliability algorithm, there are state transitions among five reliability values shown in Fig. 11. In order to raise stability of the reliability value to be obtained, when the numerical value of the reliability value is changed, based on this state transition, so-called protection (forward protection and backward protection) is performed, and precision of the reliability value is raised.

Fig. 6 shows the period reliability value calculation, algorithm mainly in case the numerical value calculated by the period calculation expression Y is such that the period reliability value of this time is 0 (reliability is highest) and the period reliability value of last time is 0 (reliability is highest). A flow indicated by an arrow of flow 1 (F601) is the case when the state of the reliability value is normal. If this case, as high reliability is kept, there is no processing of the period reliability value.

A flow indicated by an arrow of flow 2 (F602) is the case when the reliability value is in restoration protection. In this case, a restoration protection counter is counted up, and in case the result is less than a restoration protection time, there will be no further processing, and in case the restoration protection time has expired, a reliability value recovery parameter is calculated. The reliability value recovery parameter is a parameter for restoring the reliability value during a period which multiplied the reliability value which continually degraded up to present by a penalty coefficient.

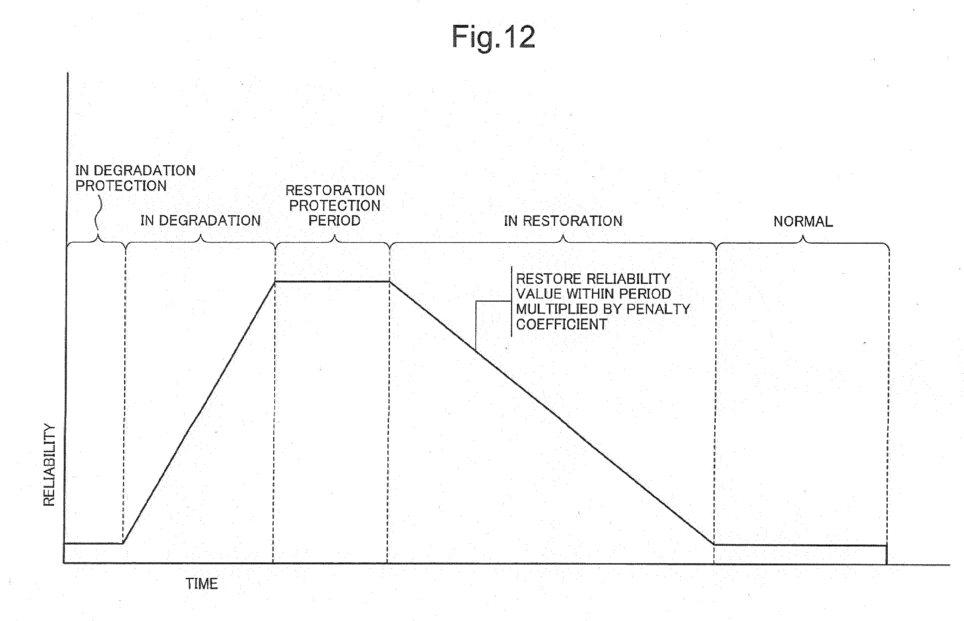

A change of the reliability value from degradation to restoration is shown by a graph in Fig. 12. A calculation method of the reliability value recovery parameter will be the following expression.

$$\text{Reliability value recovery parameter} = \text{present reliability value} \mathbin{/} \text{degradation duration time} \mathbin{/} \text{penalty coefficient}$$

A flow indicated by flow 3 (F603) is the case when the reliability value is in restoration. If this case, the reliability value recovery parameter obtained in flow 2 is subtracted from the present reliability value. In case the reliability value becomes 1 as the subtraction result, the state of the reliability value is transitioned to normal.

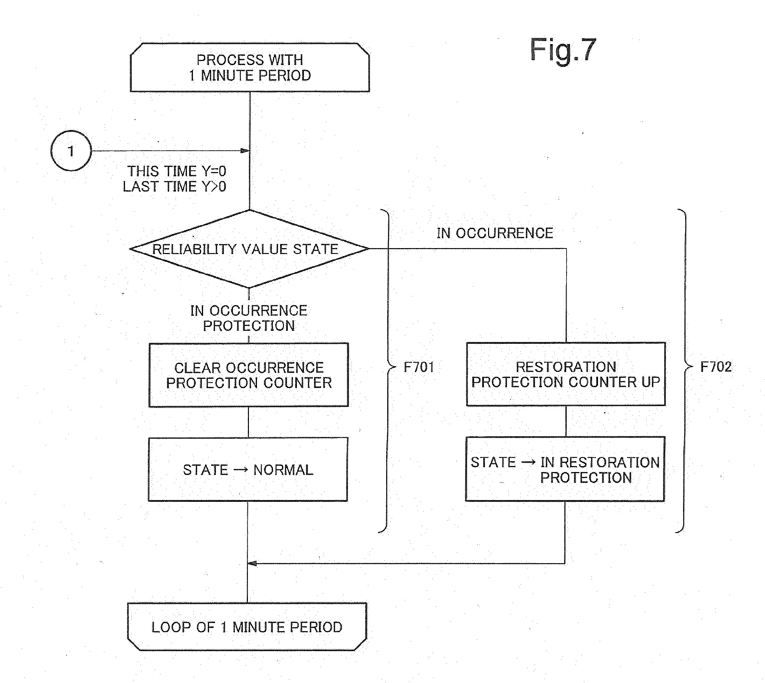

Fig. 7 is the period reliability value calculation algorithm in case the numerical value calculated by the period calculation expression Y is such that the period reliability value of this time is 0 (high reliability) and the period reliability value of last time is larger than 0 (reliability is degraded). Flow 1 (F701) is a flow in case the state of the reliability value is in occurrence protection. In this case, an occurrence protection counter is cleared, and the state of the reliability value is transitioned to normal. Flow 2 (F702) is a flow when the state of the reliability value is in occurrence. In this case, the restoration protection counter is counted up, and the state of the reliability value is transitioned to in restoration protection.

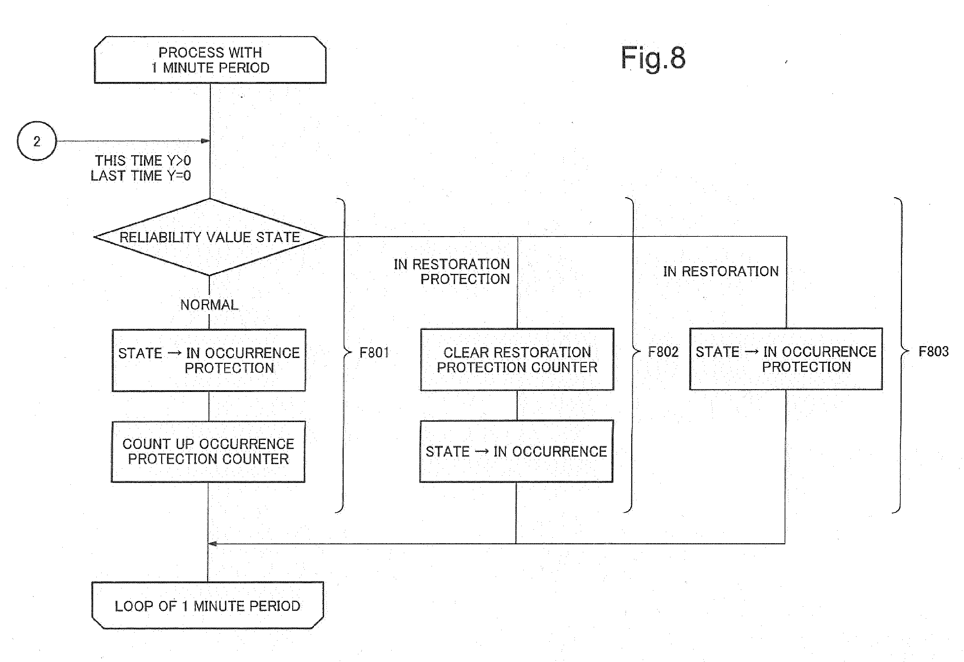

Fig. 8 is the period reliability value calculation algorithm in case the period reliability value of this time calculated by the period calculation expression Y is larger than 0 (reliability is degraded), and in case the period reliability value of last time is 0 (reliability is highest). Flow 1 (F801) is a flow in case the state of the reliability value is normal. In this case, the state of the reliability value is set to in occurrence protection and the occurrence protection counter is counted up. Flow 2 (F802) is a flow in case the state of the reliability value is in restoration protection. In this case, the restoration protection counter is cleared, and the state of the reliability value is transitioned to in occurrence. Flow 3 (F803) is a flow in case the state of the reliability value is in restoration. In this case, the state of the reliability value is transitioned to in occurrence protection.

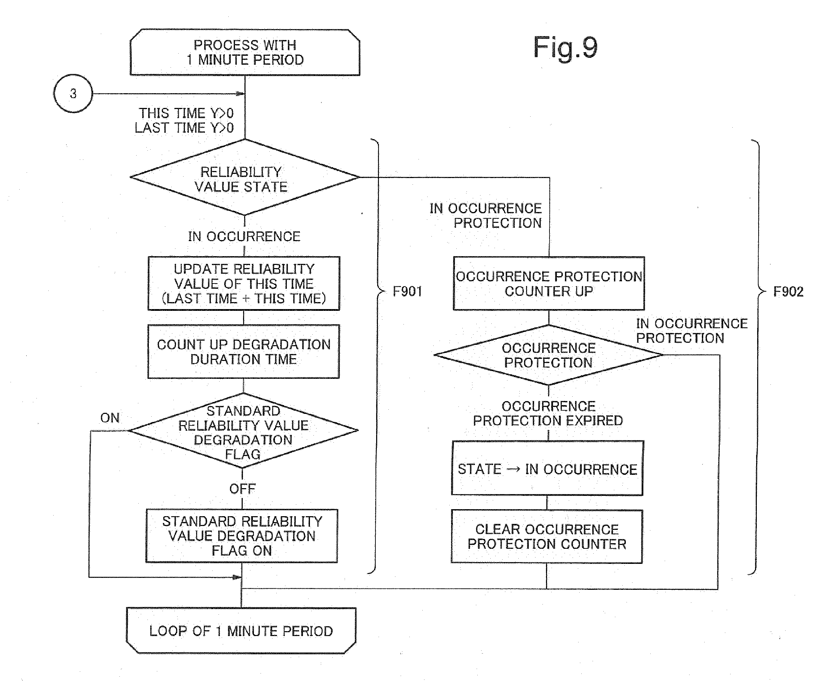

Fig. 9 is the period reliability value calculation algorithm in case the period reliability value of this time calculated by the period calculation expression Y is larger than 0 (reliability is degraded), and in case the period reliability value of last time is larger than 0 (reliability is degraded). Flow 1 (F901) is a flow in case the state of the reliability value is in occurrence. In this case, the sum of the period reliability values of this time and last time is calculated and after the degradation duration time is counted up, in case a standard reliability value degradation flag is OFF, the standard reliability value degradation flag is turned ON. The standard reliability value degradation flag is a flag representing presence or absence of occurrence of degradation of the wireless transmission line during 24 hours. Flow 2 (F902) is flow in case the state of the reliability value is in occurrence protection. In this case, the occurrence protection counter is counted up. At the expiration time of the occurrence protection counter, the state of the reliability value is transitioned to in occurrence, and the occurrence protection counter is cleared. In case the occurrence protection counter is not expired, there will be no processing.

Next, calculation algorithm of the standard reliability value will be described.

The reliability value calculation algorithm has the following characteristics.

- The reliability value is made to increase in proportion to an attenuation time (time of low modulation system) in the wireless section.
- Recovery of the reliability value is imposed a penalty against degradation of the reliability value. That is, compared with the period during which the reliability value degrades, the time during which the reliability value recovers is made longer.
- At the degraded time of the reliability value, it has so-called "protection." (forward protection and backward protection) for ascertaining whether it is a change in propagation environment which is good enough for the reliability value to be changed actually at the recovery time.

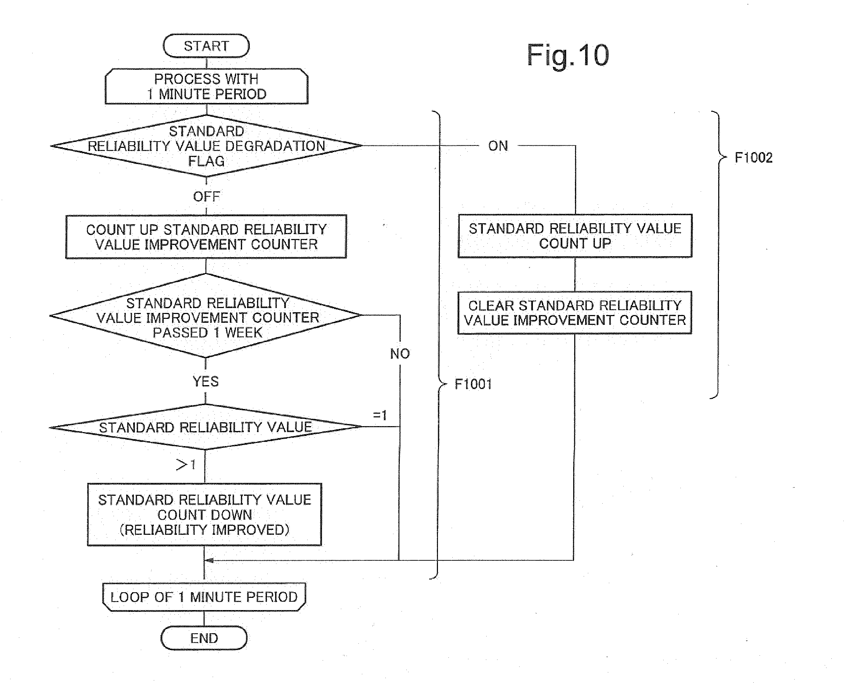

Fig. 10 shows a flow of the standard reliability value calculation algorithm. This algorithm is executed by 24 hours period. Flow 1 (F1001) is a flow in case the standard reliability value degradation flag is OFF. In this case, a standard reliability value improvement counter is counted up. The standard reliability value improvement counter is a counter for improving (decreasing numerical value of) the standard reliability value, in case degradation of the wireless transmission line does not occur during 1 week. In case the standard reliability value improvement counter has passed 1 week, and in case the standard (reliability value is larger than 1, subtraction is executed for the standard reliability value. The standard reliability value decreases by this subtraction, and it can express that the reliability has improved. In case the standard reliability value is 1, that is, minimum value of the standard reliability value, processing is unnecessary. Flow 2 (F1002) is a flow in case the standard reliability value degradation flag is ON. In this case, the standard reliability value is counted up (reliability is degraded), and the standard reliability value improvement counter is cleared.

The reliability value which was calculated by the reliability value calculation algorithm explained above is exchanged by advertising each other as routing information between the wireless transmission equipment. In each of the wireless transmission equipment, by using the advertised reliability value, path selection considering the reliability of each path is performed. Although advertisement method to neighboring wireless equipment, generally advertises using an OSPF (Open Shortest Path First) system and so on, it is not limited in particular to the OSPF system.

According to the first exemplary embodiment of the present invention, the reliability value of the wireless transmission line, for which adaptive modulation control was performed due to attenuation of the microwave of the wireless section at the change time of the weather, is calculated by the reliability value calculation algorithm. Therefore, by exchanging the calculated reliability value information as routing information and using it as information of path selection, it is possible to provide the path selection method of the wireless communication network which, when path search is performed, can select the path with higher reliability.

(The second exemplary embodiment)

The second exemplary embodiment according to the present invention will be described with reference to drawings.

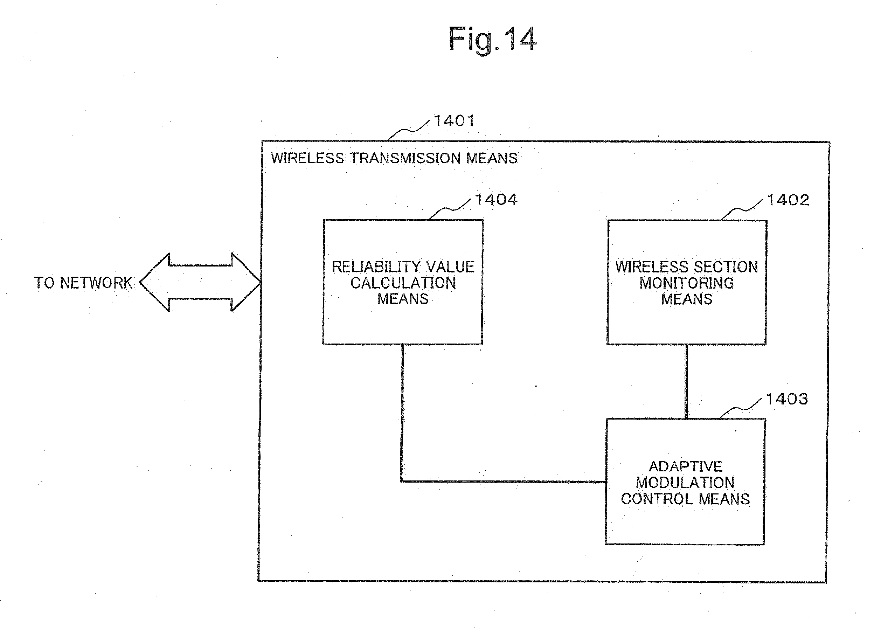

Fig. 14 is a block diagram of a wireless communication network and a path selection method according to the second exemplary embodiment of the present invention.

1401 is a wireless transfer means, 1402 is a wireless section monitoring means, 1403 is an adaptive modulation control means and 1404 is a reliability value calculation means.

In the wireless communication network according to the second exemplary embodiment of the present invention, the wireless section state monitoring means 1402 monitors a state from a wireless section, the adaptive modulation control means 1403 controls a modulation system corresponding to a state change of the wireless section, and the reliability value calculation means 1404 calculates a reliability value of a path based on information from the adaptive modulation control means 1403. Because the path can be determined based on this calculated reliability value, when the user sets a wireless transmission line of End to End, at the time of path search, the path with higher reliability can be selected.

(The third exemplary embodiments)

Wireless transmission equipment according to the present invention includes a wireless section state monitoring means which monitors a state of a wireless section and an adaptive modulation control means which, corresponding to a change in the state of the wireless section detected by the wireless section state monitoring means, controls a modulation system.

Further, the wireless transmission equipment according to the present invention includes a reliability value calculation means which calculates a reliability value of the wireless section based on information of a communication time in each modulation system outputted from the adaptive modulation controls means.

Further, the wireless transmission equipment according to the present invention selects the wireless section which transmits data using the reliability value and the reliability value of other wireless sections.

(The fourth exemplary embodiment)

A path selection method according to the present invention monitors a state of a wireless section, controls a modulation system corresponding to a change in the state of the wireless section, and calculates a reliability value of the wireless section based on information of a communication time in each modulation system.

Further, the path selection method according to the present invention selects the wireless section which transmits data using the reliability value and the reliability value of other wireless sections at the time of path search.

(The fifth exemplary embodiment)

A program according to the present invention makes a computer execute a wireless sections state monitoring step which monitors a state of a wireless section and an adaptive modulation control step which, corresponding to a change in the state of the wireless section detected by the wireless section state monitoring step, controls a modulation system.

Further, the program according to the present invention makes a computer execute a step which calculates a period reliability value from a communication time in each modulation system applied by an adaptive modulation system within a fixed time and a weighting value corresponding to the applied modulation system.

Further, the program according to the present invention makes a computer execute a step which calculates a standard reliability value from a frequency of changes occurred in the modulation system by the adaptive modulation within a fixed time and a step which calculates a reliability value from a sum of the period reliability value and the standard reliability value.

Further, the program according to the present invention makes a computer execute a step which, at the time of path search, using the reliability value and the reliability value of other wireless sections, selects the wireless section which transmits data.

Furthermore, the calculation method of the reliability value which has been explained by each exemplary embodiment mentioned above indicates one example and may be made to utilize other elements other than the wireless modulation system.

Also, in each exemplary embodiment explained so far, although it was structured assuming mainly a wireless communication network which can be applied to a microwave wireless communication system, as far as they are networks which perform similar wireless communication, it is also applicable to various wireless networks for other systems.

Also, in each exemplary embodiment explained so far, although wireless transmission equipment was assumed in the wireless communication networks to be exclusive communication equipment, the following case is also fine. That is, for example, a board or a card which perform communication processing corresponding to a wireless communication unit of this example are loaded on a personal computer equipment which performs various data processing, and communication control processing is executed on the computer equipment side. By doing this way, it may also be structured so that software which executes the communication control processing is installed on the personal computer equipment and executed.

Concerning a program installed on data processing equipment of the personal computer equipment, it may be distributed via various recording (memory) media such as optical disc and memory card or it may be distributed via a communication means such as the internet.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application claims priority based on Japanese Patent Application No. 2010-181367 filed on August 3, 2010 and the disclosure thereof is incorporated herein in its entirety.

Although a part or all of the exemplary embodiments mentioned above can also be described as the following supplementary notes, they are not limited to the following.

(Further exemplary embodiment 1)

Wireless transmission equipment characterized by comprising:

a wireless section state monitoring means which monitors a state of a wireless section;
an adaptive modulation control means which controls a modulation system in response to a change in the state of the wireless section detected by said wireless section state monitoring means; and
a reliability value calculation means which calculates a reliability value of the wireless section based on information of a communication time in each modulation system outputted from said adaptive modulation control means.

(Further exemplary embodiment 2)

The wireless transmission equipment according to further exemplary embodiment 1, characterized by transmitting said calculated reliability value to other said wireless transmission equipment as routing information.

(Further exemplary embodiment 3)

The wireless transmission equipment according to further exemplary embodiment 2, characterized by exchanging said calculated reliability value by advertising each other between a plurality of said wireless transmission equipment as the routing information.

(Further exemplary embodiment 4)

The wireless transmission equipment according to either of further exemplary embodiment to further exemplary embodiment 3, wherein said reliability value is a period reliability value which is calculated from the communication time in each modulation system applied by an adaptive modulation system and a weighting value corresponding to the applied modulation system.

(Further exemplary embodiment 5)

The wireless transmission equipment according to either of further exemplary embodiment 1 to further exemplary embodiment 3, wherein said reliability value is a standard reliability value calculated from a frequency of changes occurred in the modulation system by the adaptive modulation.

(Further exemplary embodiment 6)

The wireless transmission equipment according to further exemplary embodiment 4 or further exemplary embodiment 5, wherein said reliability value is obtained from a sum of said period reliability value and said standard reliability value.

9

(Further exemplary embodiment 7)

The wireless transmission equipment according to either of further exemplary embodiment 1 to further exemplary embodiment 6, characterized by performing selection based on said reliability value from among a plurality of said wireless sections which are provided for possible selection as a path to transmit data.

(Further exemplary embodiment 8)

A communication network comprising a plurality of wireless transmission equipment according to either of further exemplary embodiment 1 to further exemplary embodiment 7 being connected mutually by a communication circuit.

(Further exemplary embodiment 9)

A path selection method characterized by comprising:

monitoring a state of a wireless section;
controlling a modulation system corresponding to a change in the state of the wireless section detected; and
calculating a reliability value of the wireless section based on information of a communication time by each modulation system.

(Further exemplary embodiment 10)

The path selection method according to further exemplary embodiment 9, characterized by transmitting said calculated reliability value to other said wireless transmission equipment as routing information.

(Further exemplary embodiment 11)

The path selection method according to further exemplary embodiment 10, characterized by exchanging said calculated reliability value by advertising each other among said wireless transmission equipment as the routing information.

(Further exemplary embodiment 12)

The path selection method according to either of further exemplary embodiment 9 to further exemplary embodiment 11, wherein said reliability value is a period reliability value which is calculated from the communication time in each modulation system applied by an adaptive modulation system and a weighting value corresponding to the applied modulation system.

(Further exemplary embodiment 13)

The path selection method according to either of further exemplary embodiment 9 to further exemplary embodiment 11, wherein said reliability value is a standard reliability value calculated from a frequency of changes occurred in the modulation system by the adaptive modulation.

(Further exemplary embodiment 14)

The path selection method according to further exemplary embodiment 12 or further exemplary embodiment 13, wherein said reliability value is obtained from a sum of said period reliability value and said standard reliability value.

(Further exemplary embodiment 15)

The path selection method according to either of further exemplary embodiment 9 to further exemplary embodiment 14, characterized by:

performing selection based on said reliability value from among a plurality of said wireless sections which are provided for possible selection as a path to transmit data.

(Further exemplary embodiment 16)

A program characterized by making a computer execute: a wireless section state monitoring step which monitors a state of a wireless section;
an adaptive modulation control step which controls a modulation system in response to a change in the state of the wireless section detected by said wireless section state monitoring step;
a step which calculates a period reliability value from a communication time by each modulation system applied by an adaptive modulation system within a fixed time and a weighting value corresponding to the applied modulation system;
a step which calculates a standard reliability value from a frequency of changes occurred in the modulation system by the adaptive modulation within a fixed time;
a step which calculates a reliability value from a sum of the period reliability value and the standard reliability value; and
a step which performs selection based on said reliability value from among a plurality of said wireless sections which are provided for possible selection as a path to transmit data.

(Further exemplary embodiment 17)

A communication system using an adaptive modulation system, and a wireless communication system characterized by comprising:

changing a modulation system by adaptive modulation;
providing a plurality of wireless sections which are provided for possible selection as a path to transmit data;
calculating a reliability value of said plurality of wireless sections based on information of a communication time in each modulation system applied to said plurality of wireless sections; and
selecting the wireless section to transmit data based on the reliability value concerned.

**Industrial applicability**

The present invention relates to a path selection method of a wireless communication network configured using a wireless equipment including adaptive modulation systems and has the industrial applicability..

**Reference Sign List**

| | |
|---|---|
| 1300 | Wireless transmission equipment |
| 1301 | Wireless section monitoring unit |
| 1302 | Adaptive modulation control unit |
| 1303 | Modulation system integration unit |
| 1304 | Reliability value calculation unit |

**Claims**

1. Wireless transmission equipment **characterized by** comprising:

   a wireless section state monitoring means which monitors a state of a wireless section;
   an adaptive modulation control means which controls a modulation system in response to a change in the state of the wireless section detected by said wireless section state monitoring means; and
   a reliability value calculation means which calculates a reliability value of the wireless section based on information of a communication time in each modulation system outputted from said adaptive modulation control means.

2. The wireless transmission equipment according to claim 1, **characterized by** transmitting said calculated reliability value to other said wireless transmission equipment as routing information.

3. The wireless transmission equipment according to claim 2, **characterized by** exchanging said calculated reliability value by advertising each other between a plurality of said wireless transmission equipment as the routing information.

4.  The wireless transmission equipment according to either of claim 1 to claim 3, wherein said reliability value is a period reliability value which is calculated from the communication time in each modulation system applied by an adaptive modulation system and a weighting value corresponding to the applied modulation system.

5.  The wireless transmission equipment according to either of claim 1 to claim 3, wherein said reliability value is a standard reliability value calculated from a frequency of changes occurred in the modulation system by the adaptive modulation

6.  The wireless transmission equipment according to claim 4 or claim 5, wherein said reliability value is obtained from a sum of said period reliability value and said standard reliability value.

7.  The wireless transmission equipment according to either of claim 1 to claim 6, **characterized by** performing selection based on said (reliability value from among a plurality of said wireless sections which are provided for possible selection as a path to transmit data.

8.  A communication network comprising a plurality of wireless transmission equipment according to either of claim 1 to claim 7 being connected mutually by a communication circuit.

9.  A path selection method **characterized by** comprising:

    monitoring a state of a wireless section;
    controlling a modulation system corresponding to a change in the state of the wireless section detected; and
    calculating a reliability value of the wireless section based on information of a communication time by each modulation system.

10. The path selection method according to claim 9, **characterized by** transmitting said calculated reliability value to other said wireless transmission equipment as routing information.

11. The path selection method according to claim 10, **characterized by** exchanging said calculated reliability value by advertising each other among said wireless transmission equipment as the routing information.

12. The path selection method according to either of claim 9 to claim 11, wherein said reliability value is a period (reliability value which is calculated from the communication time in each modulation system applied by an adaptive modulation system and a weighting value corresponding to the applied modulation system.

13. The path selection method according to either of claim 9 to claim 11, wherein said reliability value is a standard reliability value calculated from a frequency of changes occurred in the modulation system by the adaptive modulation.

14. The path selection method according to claim 12 or claim 13, wherein said reliability value is obtained from a sum of said period reliability value and said standard reliability value.

15. The path selection method according to either of claim 9 to claim 14, **characterized by**:

    performing selection based on said reliability value from among a plurality of said wireless sections which are provided for possible selection as a path to transmit data.

16. A program **characterized by** making a computer execute: a wireless section state monitoring step which monitors a state of a wireless section;
    an adaptive modulation control step which controls a modulation system in response to a change in the state of the wireless section detected by said wireless section state monitoring step;
    a step which calculates a period reliability value from a communication time by each modulation system applied by an adaptive modulation system within a fixed time and a weighting value corresponding to the applied modulation system;
    a step which calculates a standard reliability value from a frequency of changes occurred in the modulation system by the adaptive modulation within a fixed time;
    a step which calculates a reliability value from a sum of the period reliability value and the standard reliability value; and
    a step which performs selection based on said reliability value from among a plurality of said wireless sections which are provided for possible selection as a path to transmit data.

17. A communication system using an adaptive modulation system, and a wireless communication system **characterized by** comprising:

changing a modulation system by adaptive modulation;
providing a plurality of wireless sections which are provided for possible selection as a path to transmit data;
calculating a reliability value of said plurality of wireless sections based on information of a communication time in each modulation system applied to said plurality of wireless sections; and
selecting the wireless section to transmit data based on the reliability value concerned.

Fig.1

# Fig.2

L101

W102    N103    W104

RESTORATION
OR
LSP BYPASS
SETTING

N101 — W101 — N102

N105 — W106 — N106

L102    W103

L105

N104

W105

## Fig.3

TRANSMISSION
BAND EXISTS

N101   L101   N106

BAND DECREASE
BY ADAPTIVE
MODULATION

NO TRANSMISSION
BAND EXISTS

N101   L101   DROP   N106

EP 2 605 573 A1

Fig.4

# Fig.5

```
            ┌─────────────┐
            │    START    │
            └─────────────┘
                   │
        ┌──────────────────────┐
        │ LOOP OF 1 SECOND PERIOD │
        └──────────────────────┘
                   │
        ┌──────────────────────┐
        │ INTEGRATE MODULATION SYSTEM │  ⎤
        │    CURRENTLY SELECTED      │  ⎬ S501
        └──────────────────────┘        ⎦
                   │
       NO     ◇─────────────◇
     ◄────────  1 MINUTE PASSED
               ◇─────────────◇
                   │ YES
        ┌──────────────────────┐
        │   CALCULATE PERIOD    │  ⎤
        │   RELIABILITY VALUE   │  ⎬ S502
        └──────────────────────┘  ⎦
                   │
       NO     ◇─────────────◇
     ◄────────  24 HOURS PASSED
               ◇─────────────◇
                   │ YES
        ┌──────────────────────┐
        │  CALCULATE STANDARD   │  ⎤
        │   RELIABILITY VALUE   │  ⎬ S503
        └──────────────────────┘  ⎦
                   │
        ┌──────────────────────┐
        │ UPDATE RELIABILITY VALUE │  ⎬ S504
        └──────────────────────┘
                   │
        ┌──────────────────────┐
        │ LOOP OF 1 SECOND PERIOD │
        └──────────────────────┘
                   │
            ┌─────────────┐
            │     END     │
            └─────────────┘
```

# Fig.6

START

PROCESS WITH
1 MINUTE PERIOD

CALCULATE PERIOD RELIABILITY
VALUE FOR 1 MINUTE
CALCULATION EXPRESSION Y

COMPARE
WITH PERIOD RELIABILITY VALUE OF
LAST TIME

THIS TIME Y=0          THIS TIME Y=0     THIS TIME Y>0     THIS TIME Y>0
LAST TIME Y=0          LAST TIME Y>0     LAST TIME Y=0     LAST TIME Y>0

                                              ( 1 )            ( 2 )            ( 3 )

F601    NORMAL

RELIABILITY
VALUE STATE  ──── IN RESTORATION ────

IN RESTORATION PROTECTION    F602

RESTORATION PROTECTION        RELIABILITY VALUE UPDATE
COUNTER UP                    CALCULATION EXPRESSION A

IN PROTECTION                        F603

RESTORATION                   RELIABILITY VALUE
PROTECTION TIME

PROTECTION TIME EXPIRED       RELIABILITY VALUE      RESTORATION
                              RESTORATION COMPLET    NOT COMPLETED

STATE → IN RESTORATION        STATE → NORMAL

CALCULATE RELIABILITY VALUE
RECOVERY PARAMETER

PROCESS WITH
1 MINUTE PERIOD

END

EP 2 605 573 A1

# Fig.7

```
        ┌──────────────────────┐
        │   PROCESS WITH       │
        │   1 MINUTE PERIOD    │
        └──────────────────────┘
                   │
    ①─────────────▶│
                   │
        THIS TIME Y=0
        LAST TIME Y>0
                   │
                   ▼
              ╱─────────────────╲          IN OCCURRENCE
             ╱  RELIABILITY      ╲─────────────────────────────┐
             ╲  VALUE STATE      ╱                             │
              ╲─────────────────╱                             │
                   │                                          │
           IN OCCURRENCE                                      │
            PROTECTION                                        │
                   │                                          │
                   ▼                                          ▼
        ┌──────────────────────┐              ┌──────────────────────┐
        │  CLEAR OCCURRENCE    │   ⎫          │    RESTORATION       │   ⎫
        │  PROTECTION COUNTER  │   ⎬ F701     │ PROTECTION COUNTER UP│   ⎬ F702
        └──────────────────────┘   ⎭          └──────────────────────┘   ⎭
                   │                                          │
                   ▼                                          ▼
        ┌──────────────────────┐              ┌──────────────────────┐
        │   STATE → NORMAL     │              │  STATE → IN RESTORATION│
        │                      │              │     PROTECTION       │
        └──────────────────────┘              └──────────────────────┘
                   │                                          │
                   ▼◀─────────────────────────────────────────┘
        ┌──────────────────────┐
        │ LOOP OF 1 MINUTE PERIOD │
        └──────────────────────┘
```

Fig.8

PROCESS WITH
1 MINUTE PERIOD

②

THIS TIME Y>0
LAST TIME Y=0

RELIABILITY VALUE STATE

NORMAL

STATE → IN OCCURRENCE
PROTECTION

COUNT UP OCCURRENCE
PROTECTION COUNTER

F801

IN RESTORATION
PROTECTION

CLEAR RESTORATION
PROTECTION COUNTER

STATE → IN OCCURRENCE

F802

IN RESTORATION

STATE → IN OCCURRENCE
PROTECTION

F803

LOOP OF 1 MINUTE PERIOD

Fig.9

# Fig.10

```
                    ( START )
                        │
              ┌─────────────────────┐
              │   PROCESS WITH      │
              │   1 MINUTE PERIOD   │
              └─────────────────────┘
                        │
                  ╱─────────────╲
                 ╱   STANDARD    ╲         ON
              ◄─ RELIABILITY VALUE DEGRADATION ─────────────────────┐
                 ╲     FLAG      ╱                                   │
                  ╲─────────────╱                                   │  ⎫
                        │ OFF                                        │  ⎬ F1002
              ┌─────────────────────┐          ┌──────────────────────┐
              │ COUNT UP STANDARD   │          │ STANDARD RELIABILITY │
              │ RELIABILITY VALUE   │          │ VALUE COUNT UP       │
              │ IMPROVEMENT COUNTER │          └──────────────────────┘
              └─────────────────────┘                     │
                        │                     ┌──────────────────────┐
                  ╱─────────────╲             │ CLEAR STANDARD       │
                 ╱  STANDARD     ╲            │ RELIABILITY VALUE    │
                ╱  RELIABILITY    ╲   NO      │ IMPROVEMENT COUNTER  │
               ◄  VALUE IMPROVEMENT ──┐       └──────────────────────┘
                ╲ COUNTER PASSED ╱    │
                 ╲  1 WEEK      ╱      │
                  ╲───────────╱       │
                        │ YES         │
                  ╱─────────────╲  =1  │
                 ◄ STANDARD      ──────┤
                  ╲ RELIABILITY ╱      │
                   ╲  VALUE    ╱       │       ⎫ F1001
                    ╲────────╱         │
                        │ >1           │
              ┌─────────────────────┐  │
              │ STANDARD RELIABILITY│  │
              │ VALUE COUNT DOWN    │  │
              │ (RELIABILITY        │  │
              │  IMPROVED)          │  │
              └─────────────────────┘  │
                        │◄─────────────┘
              ┌─────────────────────┐
              │ LOOP OF 1 MINUTE    │
              │ PERIOD              │
              └─────────────────────┘
                        │
                    (  END  )
```

# Fig.11

NORMAL

DEGRADATION OCCURRED

RESTORATION PROTECTION
COMPLETED

RESTORED

IN OCCURRENCE
PROTECTION

DEGRADATION OCCURRED

IN RESTORATION

OCCURRENCE PROTECTION
COMPLETED

RESTORED

IN OCCURRENCE

IN RESTORATION
PROTECTION

DEGRADATION OCCURRED

## Fig.12

# Fig.13

EP 2 605 573 A1

1300

WIRELESS TRANSMISSION EQUIPMENT

1310

NEIGHBORING
WIRELESS
TRANSMISSION
EQUIPMENT

RELIABILITY
VALUE

1304

RELIABILITY VALUE
CALCULATION UNIT

1301

WIRELESS SECTION
MONITORING UNIT

ANTENNA

1303

MODULATION
SYSTEM
INTEGRATION UNIT

1302

ADAPTIVE
MODULATION
CONTROL UNIT

## Fig.14

EP 2 605 573 A1

## INTERNATIONAL SEARCH REPORT

| | International application No. |
|---|---|
| | PCT/JP2011/068213 |

**A. CLASSIFICATION OF SUBJECT MATTER**
*H04W24/04*(2009.01)i, *H04L1/22*(2006.01)i, *H04L27/00*(2006.01)i, *H04W28/18*
(2009.01)i, *H04W40/14*(2009.01)i

According to International Patent Classification (IPC) or to both national classification and IPC

**B. FIELDS SEARCHED**

Minimum documentation searched (classification system followed by classification symbols)
H04B7/24-7/26, H04W4/00-99/00, H04L1/00-1/24, H04L27/00-27/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2010/090311 A1 (NEC Corp.),<br>12 August 2010 (12.08.2010),<br>paragraphs [0046] to [0048], [0052] to [0055],<br>[0070] to [0085], [0100] to [0105], [0110] to<br>[0114]<br>(Family: none) | 1,7-9,15,17<br>2,3,10,11<br>4-6,12-14,16 |
| X<br>Y<br>A | Jun NISHIOKA, Satoru YAMANO, "A Study on<br>Routing over AMC-enabled FWA Mesh Network",<br>IEICE Technical Report. NS, 15 January 2009<br>(15.01.2009), vol.108, no.392, pages 49 to 54 | 1,7-9,15,17<br>2,3,10,11<br>4-6,12-14,16 |
| Y | JP 2010-50520 A (Buffalo Inc.),<br>04 March 2010 (04.03.2010),<br>paragraphs [0027] to [0030]; fig. 8<br>& US 2010/0046417 A1    & CN 101657016 A | 2,3,10,11 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 September, 2011 (09.09.11) | 20 September, 2011 (20.09.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2011/068213 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2008-66827 A  (KDDI R&D Laboratories,  Inc.), 21 March 2008 (21.03.2008), paragraphs [0029] to [0050] (Family: none) | 2,3,10,11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010117095 A
- JP 2006287549 A
- JP 4432645 B
- JP 2010181367 A